# EUROPEAN PATENT SPECIFICATION

(11) **EP 0 689 770 B1**
(45) Date of publication and mention of the grant of the patent: **28.02.2001**
(21) Application number: 94110078.6
(22) Date of filing: 29.06.1994
(51) Int. Cl.: A23L 1/0522, A23L 1/0534, A23L 1/0526, A23L 1/054, A23L 1/0532, A23L 1/39

(54) **Composition to control the viscosity of fluid food**
Zusammensetzung zur Viskositätskontrolle von flüssigen Nährmitteln
Composition pour contrôler la viscosité des aliments liquides

(43) Date of publication of application: 03.01.1996
(73) Proprietor: AQUALON COMPANY, Wilmington, Delaware 19899-8740 (US)
(72) Inventor: van Coillie, Roger c/o Aqualon France, F-27460 Alizay (FR)
(74) Representative: Jönsson, Hans-Peter, Dr.Dipl.-Chem.

(56) References cited:
- EP-A- 0 222 601
- WO-A-88/06847
- WO-A-92/01390
- GB-A- 2 258 800
- US-A- 4 192 900
- US-A- 4 707 374
- US-A- 5 087 471
- US-I4- T 877 003
- FOOD TECHNOLOGY, vol.45, no.6, June 1991, CHICAGO US page 110 PAMELA A. GALVIN '"Pasteurized salads using ingredient blend retain fresh flavor"'
- FOOD TECHNOLOGY, vol.36, no.4, April 1982, CHICAGO US pages 72 - 74 R.S.IGOE '"Hydrocolloid interactions useful in food systems"'

## Description

The invention refers to a fluid food composition having a relatively constant viscosity over a temperature range of at least 30 to 80 °C.

From general culinary literature it is well-known to thicken fluid food compositions by flour, starch and other thickening agents. However, particular sauces like Bechamel type sauce or tomato sauce usually reveal serious problems with respect to the viscosity during heating and cooling. As is well-known, a Bechamel type sauce can be prepared by a blend of modified pregelatinized starch, skim milk powder, whole milk powder, powdered fat, and salt in water or cold milk. Generally, the consistency of the sauce increases during heating by amounts sometimes difficult to forecast, depending on the duration of the heating period and the sauce temperature. In addition, after heating, the sauce can thicken during cooling by a significant amount, and create problems while using.

GB 2258800 relates to the manufacture of a shaped food product, for example potato chips prepared by frying mashed potato mix with modified starch, methyl cellulose, sodium alginate and further components.

The problem of viscosity control also exists with the use of most gums. US 4,915,970-A (Coffey) discloses a method of thickening a food product which is said to substantially maintain the viscosity when heated to elevated temperatures. The method comprises using binary combinations of specific methylcelluloses with various food approved starches. Although this patent recommends the addition of methylcellulose in starch based preparations to improve the viscosity control at high temperature, this composition does not enable the skilled artisan to achieve the desired viscosity stability over a broad temperature range. Moreover, US 4,915,970-A discloses the use of a specific methylcellulose only, since Comparative Example C6 generally discloses a combination of food starch with methylcellulose, illustrating that certain cellulose derivatives when combined with starch, form a thickening composition which does not exhibit the desirable high temperature viscosity control. Comparative Example 3 furthermore discloses in the same way that a binary combination of starch with hydroxypropylmethylcellulose only is unsuitable since this composition is unable to maintain the desirable viscosity at elevated temperatures.

US 4,192,900 A (Cheng) discloses the preparation of uniform starch particles from one or more starches selected from tapioca, corn, waxy maize, potato, sago, arrowroot and cereal; and one or more gelling hydrocolloids selected from sodium alginate, sodium pectate, hydroxypropylcellulose, methylcellulose, hydroxypropylmethylcellulose, methylethylcellulose, carrageenan, furcellaran, agar, gelatin, a mixture of xanthan gum and locust bean gum, and curdlan; by adding water, extruding, cutting and drying. The preparation is said to be useful in preparing retorted or aseptically packaged, tapioca style pudding and other, edible texturized starch products. These combinations may be utilized to improve the heat and shear stability of pregelatinized and partially pregelatinized starches.

Taking into account the above mentioned prior art, there is still a need for a thickener composition providing a thickened fluid food composition having a relatively constant viscosity over a temperature range of at least about 30 to about 80°C in particular during heating, cooling and reheating of the food composition.

In order to overcome the above mentioned problem, it has been found that a specific ternary thickener combination of starch or modified starch, a thermally gelling water-soluble polysaccharide and a thickening water-soluble polysaccharide is suitable to provide a fluid food composition having a relatively constant viscosity over a temperature range of at least 30 to 80°C.

The present invention describes the use of hydrocolloid blends to thicken food products, to obtain a stable viscosity during heating to a high temperature and to reduce the retrogradation of the starch contained in the blend. The hydrocolloid blend is composed of starch, a thermally-gelling derivative, preferably methylcellulose or hydroxypropylmethylcellulose and a thickening derivative such as sodium carboxymethylcellulose.

The ternary thickener combination of the present invention is designed to obtain a stable viscosity during heating in order not to cause a significant viscosity increase upon cooling to 60°C, a temperature which can be considered like that of a food product being reheated or lowering temperature, for instance to 45 °C or 30°C, as is encountered in eating the product.

Thus, in a first aspect the present invention relates to a fluid food composition according to claim 1.

In the present invention it has been unexpectedly found that the above mentioned combination of at least three different components is suitable to overcome the consistency problems of fluid food compositions in particular in that, after heating the composition does not thicken during cooling by a significant amount. This finding was in particular surprising in view of the prior art indicating that at least a binary combination of starch with a thermally gelling water-soluble polysaccharide such as hydroxypropylmethylcellulose does not form an appropriate thickening composition exhibiting the desirable temperature viscosity control over a wide range. It was thus unforeseeable that the additional presence of a thickening water-soluble polysaccharide is suitable to provide a fluid food composition having a relatively constant viscosity over a broad temperature range during heating and cooling of the composition. Thus, although US 4,915,970 A discloses several disadvantages of the use of gums in thickening systems, the present inventor has found that the claimed ternary combination of starch or modified starch with a thermally gelling water-soluble polysaccharide and a thickening water-soluble polysaccharide is applicable to overcome the drawbacks of the prior art.

The amount of the thickener combination with respect to the total amount of the fluid food composition of course depends on the viscosity desired and depends on the type of the ingredients. Accordingly, under usual circumstances, the ternary thickener combination is used in a total amount ranging from about 1 to about 7 % of the total weight of the food product to be thickened. Exceeding the upper amount of the ternary thickener combination will result in an undesired high viscosity of the fluid food composition whereas a too small amount of the thickener combination will not result in a sufficient thickening of the fluid food composition.

The smooth aspect and the sauce consistency will cover the food well during cooking or reheating. The final product containing the ternary thickener combination can be stored in the refrigerator or freezer and then be reheated in a water bath or in the microwave oven or any other heating means. The mixture of hydrocolloids avoids syneresis formation upon thawing and enables one to regenerate by heating the consistency of the sauce obtained during the preparation.

The ratio of starch or modified starch on one hand to the thermally gelling water-soluble polysaccharide and thickening water-soluble polysaccharide in total on the other hand is of some importance. Nevertheless, starch or modified starch will be used always in an excess to the thermally-gelling water-soluble polysaccharide and the thickening water-soluble polysaccharide in total.The thickener combination comprises 60 to 95 % by weight, preferably 75 to 90 % by weight of starch or modified starch and a total of 5 to 40 % by weight, preferably 10 to 25 % by weight of the combination of the thermally gelling water-soluble and the thickening water-soluble polysaccharide.

Although the ratio of the thermally gelling water-soluble polysaccharide to the thickening water-soluble polysaccharide is of less importance, it will be clear to the artisan that at least a minimum amount of each of the polysaccharides will be necessary in order to provide the desired viscosity to the fluid food composition. Since the use of a binary combination of starch or modified starch with a thermally gelling water-soluble polysaccharide or a binary thickener combination of starch or modified starch with a thickening water-soluble polysaccharide does not overcome the drawbacks of the prior art, the ratio of the thermally gelling water-soluble polysaccharide to the thickening water-soluble polysaccharide is preferably in a weight ratio range of 20 to 80 to 80 to 20, preferably 40 to 60 to 60 to 40.

The ternary thickening combinations according to the present invention comprise as the main component at least one or a combination of starches, including modified starches. The starches used according to the present invention are those varieties which are known as food grade starches. Such food grade starches include in particular unmodified and modified α-glucose polymers of vegetable origin. Examples of suitable food starches include corn, wheat, sorghum, rice, casaba, potato, arrowroot, sago palm or combinations thereof which may be native or pregelatinized. Of the preferred corn starches, the most preferred include those crosslinked or substituted by any method accepted by the US Food and Drug Administration and its regulations published under 21 CFR § 172.892 which is incorporated herein by reference. Such food starches typically impart a thickening characteristic to the food products to which they are added. The starch used in the present invention can be of the above mentioned food starches in either its native or modified form. Native starches are produced by extraction from: the seeds of such plants as corn, wheat, sorghum or rice; the tuber, or roots, of plants like casaba, potato or arrowroot: and the pits of the sago palm. The starch can be either pregelatinized or non-gelatinized. If the starch is non-gelatinized, the preparation process of the invention must have a heating step which must be sufficient to effect gelatinization during the preparation of the thickening composition. Particularly preferred are starches or modified starches derived from corn, potatoes, wheat, rice, or combinations thereof being native or pregelatinized. Particularly, preferred is a modified pregelatinized starch being obtainable under the trademark PREGEFLO^{R} PJ2O. The modified and/or pregelatinized starches swell while cooling and in combination with the thickening and gelling polysaccharide, produce a viscosity while cooling, which will be maintained during the period of heating (which can be until boiling) and then until cooling to 60°C and eventually to 30°C.

In addition to the native or pregelatinized starch, acetylated distarch phosphate, or acetylated distarch adipate may be used in accordance with the present invention. These starches are known to the artisan. Examples of modified (or not) and pregelatinized (or not) starches that can be used in the instant invention are acetylated distarch phosphate (Pregeflo^{R} PJ20, a product marketed by ROQUETTE FRANCE, or Snowflake^{R} 20195, a product marketed by CERESTAR FRANCE), acetylated distarch adipate (Pregeflo^{R} CH 20, a product marketed by ROQUETTE FRANCE or Ultratex^{R} 2, a product marketed by NATIONAL STARCH & CHEMICAL SA), hydroxypropyl distarch phosphate (Ultratex^{R} 3, a product marketed by NATIONAL STARCH & CHEMICALS SA), distarch phosphate (Paselli^{R} P, a product marketed by AVEBE DOITTAU) the starch used would depend on the desired consistency of salted or sweet sauces or the product in which it is used such as toppings, filling products or soups. A reduction of about 20 to about 50 % of the starch concentration can be achieved by using the ternary mixture of the present invention, as compared to a reference formulation.

The ternary thickening combinations according to the present invention comprise as a second component at least one or mixtures of thermally gelling water-soluble polysaccharides.

Thermally gelling water-soluble polysaccharides, such as methylcellulose or hydroxypropylmethylcellulose are a class of cellulose ethers which have long been used in many industries as viscosity control agents, emulsifiers and binding agents. The cellulose ethers are known to be unique in that they undergo thermal gelation in water. The thermally gelling water-soluble polysaccharides are cellulose ethers soluble in cold water but the solutions gelify upon heating. In essence, as the temperature of the solution of this product increases, the polymer chains dehydrate to some extent and associate, forming a gel network. The gel formation is reversible upon the cooling of the solution of cellulose ether. Carboxymethylcellulose (CMC) also is a cellulose ether but is soluble in both cold water and hot water. By heating, the CMC solution loses viscosity, which viscosity rebuilds by cooling the fluid solution or suspension if the thermal treatment was not too long or made at a very high temperature but of reasonably short duration as those of some sterilizations. However, in a ternary combination with starch or modified starch and a thickening water-soluble polysaccharide according to the present invention, it has been found that the thermally gelling water-soluble polysaccharide helps a solution to unexpectedly maintain the viscosity of the solution upon heating when compared to the performance of other thickening compositions.

In particular, the preparation of methylcellulose or hydroxypropylmethylcellulose is known from the prior art. Furthermore, methylcellulose and hydroxypropylmethylcellulose are commercial products which can be easily obtained in the market. In particular preferred is methylcellulose being obtainable under the trademark BENECEL^{R} M021 from Aqualon Company, a division of Hercules Incorporated. The viscosity stability depending on the temperature, which is a part of this invention, is obtained by a well determined ternary combination of starch or a starch derivative, a thermally gelling and a thickening water-soluble polysaccharide. Methylcelluloses which enable to obtain the best stability of the viscosity in combination with carboxymethylcellulose are those, which provide a viscosity at 20°C in water between 10 mPa.s at 2 % concentration and 6000 mPa.s at 1 % concentration measured with the Brookfield RVT viscosimeter and preferably the qualities, which provide a viscosity between 20 and 600 mPa.s. Hydroxypropylmethylcelluloses can be used in substitution of methylcelluloses but it is preferable to choose hydroxypropylmethylcellulose having viscosity at 2 % lower than 5000 mPa.s and preferably having a viscosity lower than 600 mPa.s. The ternary thickener combination according to the present invention contains as the third component at least one thickening water-soluble polysaccharide or mixtures of several thickening water-soluble polysaccharides. The CMC types in the starch based mixtures are CMC, whose degree of substitution (DS) will be between 0.6 and 1 and preferably between 0.7 and 0.95 and whose viscosity measured at 25°C with the Brookfield LVF viscosimeter is between 25 mPa.s at 2 % and 6000 mPa.s at 1 % but preferably between 300 mPa.s at 2 % and 4500 mPa.s at 1 %. To obtain a rapid swelling of the cellulose ethers or the other gums, it is advised to use products with a very fine particle size.

In particular, the thickening water-soluble polysaccharide is selected from the group consisting of sodium carboxymethylcellulose, alginate, guar, locust bean gum, xanthan gum and mixtures thereof. In particular preferred is carboxymethylcellulose being obtainable under the trademark Blanose^{R} Cellulose Gum (BCG) 7HXF from Aqualon, a division of Hercules Incorporated.

Although it is generally preferred that fluid food compositions according to the present invention should maintain a relatively constant viscosity over a temperature range of at least 30 °C to 80 °C, in a preferred embodiment, the amounts of the ingredients of the thickener combination should be adjusted in that the viscosity is relatively constant over a range of 30 °C to 70 °C.

The present invention generally refers to fluid food compositions which are thickened by the present invention due to the combination of a specific ternary thickener combination, and include any edible fluid food product which is desirable to consumers to maintain thickening properties upon heating and cooling of the food composition. Examples of such food compositions include in particular a salted or sweet sauce, a cream soup, a gravy or a salted or sweet fluid filling. The food composition to be thickened according to the present invention must be of course compatible with the ternary thickener combination according to the present invention. It is furthermore known that typically food compositions could also include flavorings, spices and the like.

The term "sauce" means an edible food composition that includes milk base and tomato base fluid food compositions.

In particular, the present invention relates to a composition of a Bechamel type sauce or a tomato sauce, wherein the usual amount of flour or starch added is substituted by the ternary thickening combination according to the present invention.

The specific ternary thickening combination of the present invention may be formulated by incorporating starch or modified starch, a thermally gelling water-soluble polysaccharide and a thickening water-soluble polysaccharide with at least one unthickened food ingredient followed by heating the mixture blend with agitation until the thickener combination dissolves and the starch or modified starch thickens. Furthermore, the particular thickening composition of the present invention may be formulated by incorporating the thermally gelling water-soluble polysaccharide and/or the thickening water-soluble polysaccharide into the starch and then into a food composition, preferably in water to form a mixture. The mixture is heated to a temperature for a time period to effectively gelatinize. There are of course several ways of incorporating a thermally gelling water-soluble polysaccharide and a thickening water-soluble polysaccharide into the food composition and starch. The starch and food composition can be mixed in water and then the polysaccharide may be added simultaneously or sequentially. Another option is to admix one or more of the polysaccharides and the food composition together and then adding the mixture to the starch and water. Preferably, the starch and polysaccharides are admixed and then added to the food composition, or all the four components can be admixed together simultaneously.

The mixture preferably is heated to a temperature of at least 40 °C, preferably from 40 °C to 95 °C. Generally, the mixture is heated until the starch gelatinizes. Preferably, the ternary starch blend, i.e. the fluid food composition containing the starch is heated for 10 to 30 minutes. The mixture is cooled to an edible temperature. The resulting mixture has a viscosity which is maintained upon subsequent heating and cooling of the food composition.

In a preferred aspect of the present invention, the method for preparing a fluid food composition comprises the preparation of a mixture of at least two unthickened food ingredients at ambient temperature prior to the dispersion of the thickener combination.

Taking into account the above mentioned teaching, the total concentration in cellulosic ethers, methylcellulose or hydroxypropylmethylcellulose and gums preferably is included between 0.05-2.8 % but more preferably between 0.15 and 1.4 %. By using the compositions and mentioned concentrations, it is possible to prepare sauces or similar products with a stable viscosity or varying slightly, depending on temperature, compared to the variation obtained by using the starch alone or the starch with one of the gums. The viscosity stability taking into account the temperature was checked under several heating conditions. Thus, trials of slow heating (about 1 hour) of the food preparation from 20 to 90°C were made and moreover, rapid heating trials from 20°C to boiling and holding at the boiling point from 1 to 3 minutes then cooling down to 30°C in order to check the product consistency. Cooling can continue until room temperature is reached in order to store the food product in the refrigerator or to freeze it.

The effect of the thickening ternary combination has been in particular demonstrated in different types of hot white sauces often called Bechamel sauce, containing skimmed milk or powder of skimmed milk, powdered fat, salt and water. All the solid ingredients are mixed to make the ternary blend before being dispersed in cold water or milk.

The following Examples are included for the purposes of comparison and to illustrate the present invention. The present invention, however, shall not be restricted to the disclosure of the specific Examples exemplified according to the invention.

### Example 1

In a 250 ml beaker, 11.65 g of modified and pregelatinized starch (Pregeflo^{R}PJ 20), 1 g of methylcellulose (BENECEL^{R} M021^{*}), with a viscosity at 2 % and 20°C in the range of 20 to 50 mPa.s (viscosity measured with the RVT viscosimeter, equipped with spindle 1, speed 20 rpm), and 1 g of carboxymethylcellulose (Blanose^{R} Cellulose Gum 7HXF), with a viscosity at 1 % and 25°C between 1500 and 2500 mPa.s measured with the Brookfield LVF viscosimeter (spindle 3, speed 30 rpm) were introduced. One added to this blend 13.65 g of skimmed milk in powder, 8.5 g of half skimmed milk in powder, 11.50 g of fat in powder (Pulsio^{R} BVT made by SIO, Ste industrielle des oleagineux groupe ARKADY ADM-France) and 2 g of salt. These different ingredients were well mixed before being dispersed in 250 ml of cold water stirred with a whisk. After 30 seconds of stirring, viscosity was measured at 20°C with the Brookfield LVF viscosimeter by using spindle 4 at a speed of 30 rpm and then the preparation was heated in a water bath progressively in increments of 10 degrees until 90°C was reached. Viscosities were measured each 10 degrees with the same viscosimeter and under the same conditions of speed and with the same spindle. The results are noted in Table 1.

### Example 1a

The previous trial was reproduced but by using 1.5 g of methylcellulose (BENECEL^{R} M 021) and 0.5 g of carboxymethylcellulose (Blanose^{R} Cellulose Gum 7 HXF). In this case the ratio MC/CMC was 75/25 instead of 50/50 previously. Results are indicated in Table 1.

### Example 1b (Comparative)

A third trial was done with 14.9 g of starch (Pregeflo^{R} PJ 20) instead of 11.65 g and without MC or CMC addition. Under these conditions, the starch concentration was 5 % instead of 3.9 %. The preparation was heated as in the two previous trials. Viscosities were measured under the same conditions and reported in Table 1.

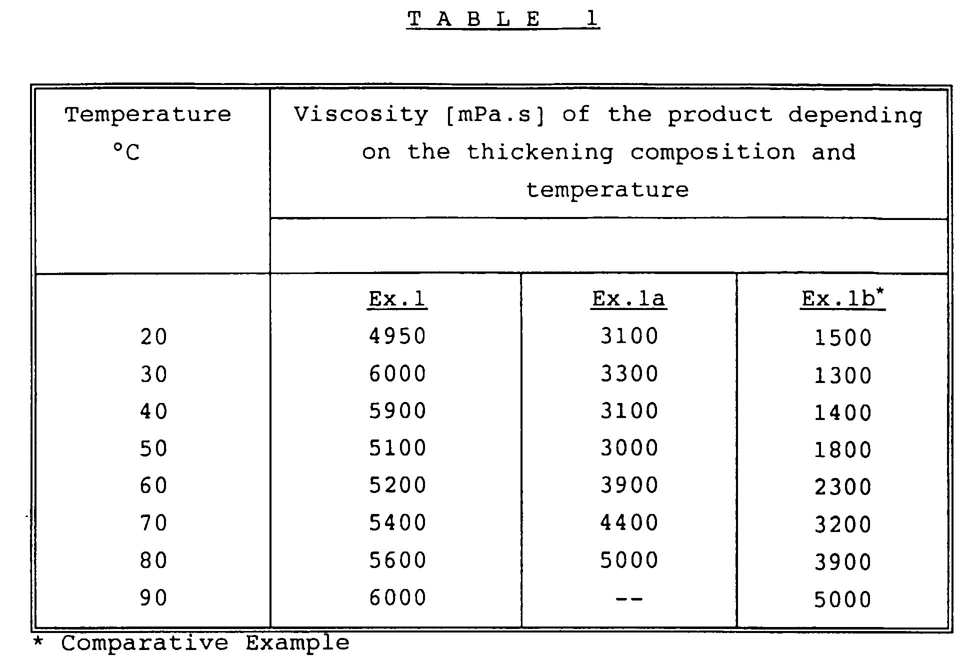

### Example 2

In a 250 ml beaker, 11.65 g of starch (Pregeflo^{R} PJ 20 3.9 % by weight of the final product), 1.5 g of methylcellulose (BENECEL^{R} M 021) and 0.5 g of carboxymethylcellulose (Blanose^{R} Cellulose Gum 7HXF) were introduced. In this case, the ratio MC/CMC was 75/25 and the concentration of the ensemble of these two ingredients was 0.67 % in the final product. One added then 13.65 g of skimmed milk powder, 8.5 g of half skimmed milk powder, 11.50 g of fat powder (Pulsio^{R} BVT) and 2 g of salt. All these powders were well mixed before being added to 250 ml of cold water. After 30 seconds of stirring with a whisk, the viscosity was measured at 20 °C with the Brookfield LVF viscosimeter equipped with the spindle 4 and speed of 30 rpm. Under these conditions, the viscosity was 4400 mPa.s.

Then, the sauce was heated in a pan on an electric plate until boiling. It was stirred with a spoon during heating and boiling (3 minutes). The sauce was then poured into a beaker and brought to 80°C in a water bath and maintained at this temperature for one hour. A viscosity measurement was made with the Brookfield LVF viscosimeter (spindle 4 speed 30 rpm) as soon as the temperature reached 80°C and then a viscosity measurement was made every 10 minutes. Results are noted in Table 2.

### Example 2a (Comparative)

The trial here above was reproduced by using 14.5 g of starch (Pregeflo^{R} PJ 20), 5 % versus the final product instead of 3.9 % previously and without MC and CMC addition. In these conditions, the viscosity at 20°C was 1200 mPa.s instead of 4400 mPa.s in Example 2.

The product viscosity was also measured at 80°C and under the same conditions as here above and the results are noted in Table 2.

### Example 3

In this example, Pregeflo^{R} PJ 20 ( acetylated distarch phosphate) was replaced by Pregeflo^{R} CH 20 (acetylated distarch adipate) and used in an amount of 3.9 % in the final product and by maintaining 0.67 % of (methylcellulose = BENECEL^{R} M 021 + carboxymethylcellulose Blanose^{R} Cellulose Gum 7 HXF). The MC/CMC proportion was 75/25 as in example 2. The viscosity obtained at 20 °C, measured with the LVF Brookfield, equipped with the spindle 4 and turning at 30 rpm was 3700 mPa.s. After boiling for 3 minutes, the product was cooled down to 80°C and this temperature was maintained for one hour by measuring the viscosity every ten minutes under the same conditions as previously mentioned. Viscosities are noted in Table 2.

### Example 3a (Comparative)

A second trial was made with 14.5 g of Pregeflo^{R} CH 20 instead of 11.65 g previously used, that is to say, a 5 % concentration instead of 3.9 % in the final product. In the absence of MC and CMC, the viscosity at 20°C was only 600 mPa.s. After heating to boiling, the temperature of the product was brought to 80°C and maintained during one hour. During this period, viscosities were measured every ten minutes under the same conditions as previously mentioned and are reported in Table 2.

**TABLE 2**

| Heating time at 80°C (minute) | Viscosities measured in mPa.s of the sauce | | | |
|---|---|---|---|---|
| | Ex.2 | Ex.2a* | Ex. 3 | Ex.3a* |
| 0 | 5600 | 2700 | 5900 | 900 |
| 10 | 6900 | 4000 | 6300 | 1100 |
| 20 | 7200 | 4700 | 6900 | 1300 |
| 30 | 7400 | 6000 | 7200 | 1800 |
| 40 | 7400 | 6400 | 7200 | 2500 |
| 50 | 7700 | 7300 | 7600 | 3000 |
| 60 | 7400 | 6700 | 7400 | 3600 |

| | | | | |
|---|---|---|---|---|
| *Comparative Example | | | | |

### Example 4

A series of three trials was made in order to demonstrate the influence of composition of the thickening mixture on the viscosity development between 80 °C and 30°C after heating of the sauce during boiling. The data are reported in Table 3. The last column headed "Ratio 2/1" indicated the coefficient obtained by dividing given viscosity at 30°C by the corresponding viscosity at 80°C.

### Example 4a (Comparative)

In a 250 ml beaker, 14.9 g of starch (Pregeflo^{R} PJ 20) to which one added 13.65 g of skimmed milk powder, 8.5 g of half skimmed milk powder, 11.5 g of fat powder (Pulsio^{R} BVT) and 2 g of salt were introduced. All these powders were well mixed in a homogeneous way before being added to 250 ml of cold water. After 30 seconds of stirring with a whisk, the viscosity was measured at 20°C with the Brookfield LVF viscosimeter equipped with spindle 4 at a speed of 30 rpm. Then, the sauce was heated until boiling and maintained for one minute. Then, the sauce was cooled down in a water bath to 80°C, before measuring the viscosity under the same conditions as previously mentioned.

Thereafter, the sauce was cooled down to 60°C, then followed by cooling to 45°C and finally to 30°C by putting the sauce into a thermostated water bath before remeasuring the viscosity under the conditions previously described. These different viscosities are noted in Table 3.

### Example 4b

In this trial one used 11.65 g of starch (Pregeflo^{R} PJ 20) and a blend of 1.5 g of methylcellulose (BENECEL^{R} M 021) and 0.5 g of carboxymethylcellulose (Blanose^{R} Cellulose Gum 7HXF) was used. This resulted in a ratio MC/CMC of 75/25. All the other ingredients were identical to the control trial, as well as the process of preparation. Viscosities were measured under the same conditions as the control trial and are reported in Table 3.

### Example 4c

In this trial, a ratio MC/CMC 50/50 was chosen which gave a 1 g additon of methylcellulose (BENECEL^{R} M 021) and 1 g of carboxymethylcellulose (Blanose^{R} Cellulose Gum 7HXF) with 11.65 g of starch Pregeflo^{R} PJ 20. All the other ingredients and quantities were identical to the control trial. The conditions of process and the viscosities measurements were identical to those of the previous trials and the results are reported in Table 3.

**TABLE 3**

| Example | Vis. 20°C before Heating | Vis. after boiling [mPa.s] | | | | Ratio 2/1 |
|---|---|---|---|---|---|---|
| | | 80°C | 60°C | 45°C | 30°C | |
| 4a* | 1900 | 3400 | 4800 | 9200 | 11400 | 3.35 |
| 4b | 3700 | 6100 | 6700 | 7500 | 7700 | 1.3 |
| 4c* | 7200 | 7200 | 7800 | 11100 | 15500 | 2.15 |

| | | | | | | |
|---|---|---|---|---|---|---|
| * Comparative Example | | | | | | |

### Example 5

In a 250 ml beaker, 11.65 g of starch (Pregeflo^{R} PJ 20), 1.35 g of methylcellulose (BENECEL^{R} M 042) with a viscosity at 2 % and 20°C in the range of 350 to 550 mPa.s measured with the Brookfield RVT viscosimeter equipped with spindle 2 at a speed of 20 rpm and 0.65 g of carboxymethylcellulose (Blanose^{R} Cellulose Gum 7HXF) already used in the previous examples were blended. To this blend, 13.65 g of skimmed milk powder, 8.5 g of half skimmed milk powder, 11.50 g of fat powder (Pulsio^{R} BVT) and 2 g of salt were added. These ingredients were dispersed after having been well mixed in 250 ml of cold water. After 30 seconds of stirring, the viscosity was measured at 20°C with the Brookfield LVF viscosimeter by using spindle 4 at a speed of 30 rpm. The product then was heated until boiling and was maintained in this state for one minute before being cooled down to 80°C, the temperature at which the viscosity was measured under the same conditions as at 20°C. Measurements of viscosity were made after cooling down the product to 60°C and to 30°C. The following viscosities were obtained:

| | |
|---|---|
| Vis. mPa.s at 20°C | 6200 |
| Vis. mPa.s at 80°C | 6800 |
| Vis. mPa.s at 60°C | 6100 |
| Vis. mPa.s at 30°C | 7200 |
| Yield vis. 30°C/vis. 80°C | 1.06 |

### Example 6

In a receiver, 11.65 g of starch (Pregeflo^{R} PJ 20), 0.5 g of hydroxypropylmethylcellulose (BENECEL^{R} MP 812 W), with a 2 % viscosity at 20 °C in the range of 50 to 80 mPa.s (viscosity measured with the Brookfield RVT viscosimeter equipped with spindle 1, speed at 20 rpm) and 1.5 g of carboxymethylcellulose (Blanose^{R} Cellulose Gum 7HXF), with a 1 % viscosity at 25 °C in the range of 1500 and 2500 mPa.s measured with the Brookfield LVF viscometer (spindle 3 and speed 30 rpm) were blended. To this blend 13.65 g of skimmed milk powder, 8.5 g of half skimmed milk powder, 11.50 g of fat powder (Pulsio^{R} BVT) and 2 g of salt were added. These different ingredients were mixed before being dispersed into 250 ml of cold water, stirred with a whisk. After 30 seconds of agitation, the viscosity was measured at 20°C with the Brookfield LVF viscosimeter by using spindle 4 at the speed of 30 rpm and then, the preparation was heated until boiling and maintained for one minute, before being cooled down to 80°C, the viscosity was measured under the same conditions as at 20°C. Measurement of viscosity was made after the product had been cooled down to 60°C and 30°C under the same conditions.

The following viscosities were obtained:

| | |
|---|---|
| Vis. mPa.s at 20°C | 7600 |
| Vis. mPa.s at 80°C | 8300 |
| Vis. mPa.s at 60°C | 10200 |
| Vis. mPa.s at 30°C | 18200 |
| Yield vis. 30°C/vis. 80°C | 2.2 |

### Example 7a

In a receiver, 11.65 g of starch (Pregefo^{R} PJ 20), 1 g of methylcellulose (BENECEL^{R} M 042 and 1 g of sodium alginate (Sobalg^{R} FD 177 of Sobalg France), with a viscosity at 1 % and 25 °C measured with the Brookfield LVF viscosimeter and by using spindle 3 at the speed of 30 rpm of 1300 mPa.s were blended. To this blend 13.65 g of skimmed milk powder, 8.5 g of half skimmed milk powder, 11.50 g of fat powder (Pulsio^{R} BVT) and 2 g of salt were added. All these ingredients were dispersed in 250 ml of water under agitation. After 30 seconds of stirring, the viscosity was measured at 20°C with the Brookfield LVF viscosimeter equipped with spindle 4 at a speed of 30 rpm. The preparation then was heated to boiling and maintained there for one minute before being cooled down to 80°C, the viscosity was measured under the same conditions previously described. A last measurement of viscosity was made when the temperature of the preparation reached 30°C.

The following viscosities were obtained:

| | |
|---|---|
| Vis. mPa.s at 20°C | 9600 |
| Vis. mPa.s at 80°C | 8900 |
| Vis. mPa.s at 60°C | 10800 |
| Vis. mPa.s at 30°C | 17200 |
| Yield vis. 30°C/vis. 80°C | 1.9 |

### Example 7b

Example 7a was reproduced under the same conditions, by using 1 g of xanthan gum (Rhodigel^{R} 200 from Rhône Poulenc) instead of 1 g of alginate and 1 g of BENECEL^{R} M 021 instead of BENECEL^{R} M 042.

Under these conditions, the following viscosities had been obtained:

| | |
|---|---|
| Vis. mPa.s at 20°C | 6600 |
| Vis. mPa.s at 80°C | 8200 |
| Vis. mPa.s at 60°C | 9400 |
| Vis. mPa.s at 30°C | 12000 |
| Yield vis. 30°C/vis. 80°C | 1.5 |

### Example 7c

Example 7b was repeated by replacing xanthan gum by the same amount of guar gum.

The viscosities obtained under these conditions were:

| | |
|---|---|
| Vis. mPa.s at 20°C | 4600 |
| Vis. mPa.s at 80°C | 11200 |
| Vis. mPa.s at 60°C | 12000 |
| Vis. mPa.s at 30°C | 15900 |
| Yield vis. 30°C/vis. 80°C | 1.4 |

### Example 7d

Example 7c was reproduced in using Locust^{R} Bean Gum instead of guar.

Under these conditions, the following viscosities had been measured:

| | |
|---|---|
| Vis. mPa.s at 20°C | 3100 |
| Vis. mPa.s at 80°C | 10800 |
| Vis. mPa.s at 60°C | 11500 |
| Vis. mPa.s at 30°C | 15200 |
| Yield vis. 30°C/vis. 80°C | 1.4 |

### Example 8

For the preparation of a highly viscous product for a filling or topping, 17.65 g of starch Pregeflo^{R} PJ 20, 1.125 g of methylcellulose (BENECEL^{R} M 021) and 1.125 g of carboxymethylcellulose (Blanose^{R} Cellulose Gum 7MXF), with a viscosity measured at 2 % and 25°C with the Brookfield LVF equipped with spindle 2 at a speed of 30 rpm in the range of 400 and 600 mPa.s were blended. To the thickening blend, 20.7 g of skimmed milk powder, 12.9 g of half skimmed milk powder, 17.4 g of fat powder (Pulsio^{R} BVT) and 3 g of salt were added. After blending all these ingredients, the blend was dispersed in 250 ml of cold water and after 30 seconds of agitation, the viscosity was measured at 25°C with the Brookfield LVF viscosimeter equipped with spindle 4 at a speed of 6 rpm.

Thereafter, the product was heated to boiling under slow agitation and maintained during boiling for one minute. It was cooled down until the temperature reached 80°C. At this temperature, the viscosity was measured under the same conditions as at 25°C. After the measurement of viscosity at 80°C, the product was placed in a thermostated bath at 60°C and a new measurement of viscosity was made under the same conditions as previously mentioned when the temperature of the product reached 60°C.

The following viscosities were obtained:

| | |
|---|---|
| Vis. mPa.s at 20°C | 51000 |
| Vis. mPa.s at 80°C | 54500 |
| Vis. mPa.s at 60°C | 61000 |
| Yield vis. 60°C/vis. 80°C | 1.12 |

### Example 9

For the preparation of a tomato sauce, 11.7 g of modified starch (Pregeflo^{R} PJ20), 1 g of methylcellulose (Bencel^{R} M021), 1 g of carboxymethylcellulose (Blanose^{R} Cellulose Gum 7 HXF) and 2 g of salt were blended. In a saucepan 60 g of tomato concentrate at 28 % dry matter, and 224.3 g of cold water were weighted. After mixing of the tomato concentrate in the water, the dry ingredients blend was added and dispersed with a whisk. The sauce was afterwards stirred for 5 min with a mechanical stirrer turning at 1200 rpm, and before the heating at 80°/85°C in a water bath, the viscosity was measured at 20°C with the Brookfield LVF viscometer (spindle 4 at a speed of 30 rpm).

During the heating to 80/85°C and the cooling down to 30°C, the sauce was stirred at a lower speed (700 rpm). The viscosity was measured under the same conditions as at 20°C, at 80°C, 60°C and 30°C.

After cooling to 20°C, the sauce was reheated again to 80°C and cooled down to 30°C without agitation. The viscosities were measured before reheating and during the cooling down from 80° to 60°C and to 30°C afterwards.

The following viscosities were obtained:

| | first heating | reheating |
|---|---|---|
| Vis. mPa.s at 20°C | 5800 | 6300 |
| Vis. mPa.s at 80°C | 5500 | 5300 |
| Vis. mPa.s at 60°C | 5700 | 6000 |
| Vis. mPa.s at 30°C | 6000 | 8400 |
| Yield vis. 30°C/vis.80°C | 1.1 | 1.6 |

### Example 10

A mushroom cream soup was prepared by blending the following dry ingredients: modified starch (Pregeflo^{R} PJ20) 4.5 g, skimmed milk powder 13.8 g, half skimmed milk powder 8.4 g, fat powder (Pulsio^{R} BVT) 11.4 g, methylcelluloses (Benecel^{R}M021) 0.45 g carboxymethylcellulose (Blanose^{R} Cellulose Gum 7HXF) 0.45 g and 2 g of salt.

In a pan 257.5 g cold water was introduced, in which 1.5 g of mushroom paste concentrated ref. n° 212140 supplied by Aromont France was diluted. In this dilution, the blend of dry ingredients was dispersed by stirring with a whisk for about 15 seconds, then homogenized for one minute with a high speed stirrer. After this agitation, the viscosity was measured at 20°C with the Brookfield LVF viscosimeter, by using spindle 2 at a speed of 30 rpm. Then the soup was stirred at 700 rpm and heated-up to 80/85°C in a water bath.

The viscosities of the soup were measured at 80°C and during the cooling down to 60°C and then to 30°C under the same conditions as at 20°C.

The following viscosities were obtained:

| | |
|---|---|
| Vis. mPa.s at 20°C | 150 |
| Vis. mPa.s at 80°C | 160 |
| Vis. mPa.s at 60°C | 175 |
| Vis. mPa.s at 30°C | 195 |
| Yield vis. 30°C/vis. 80°C | 1.2 |

### Example 11

For the preparation of a sweet sauce, 11.7 g of modified starch (Pregeflo^{R} PJ20), 1 g of methylcellulose (Benecel^{R} M021), 1g of carboxymethylcellulose (Blanose^{R} Cellulose Gum 7HXF), then 36 g of powdered sugar, 13.8 g skimmed milk powder, 8.4 g of half skimmed milk powder and finally 0.6 g of vanilla were blended. The blend was dispersed in 227.5 g of cold water, with a whisk for about 30 seconds. After this time, the viscosity was measured at 20°C with the Brookfield LVF viscosimeter by using spindle 4 at a speed of 30 rpm. Then the sauce was heated until boiling and maintained for one minute before being cooled down to 80°C, then to 60°C and to 30°C. The viscosities were measured at those temperatures under the same conditions as at 20°C.

The following viscosities were obtained:

| | |
|---|---|
| Vis. mPa.s at 20°C | 4700 |
| Vis. mPa.s at 80°C | 4500 |
| Vis. mPa.s at 60°C | 4800 |
| Vis. mPa.s at 30°C | 5000 |
| Yield vis. 30°C/vis. 80°C | 1.1 |

### Example 12

For the preparation of a gravy sauce, 12 g of Aromont. Beef base code 113203, 7.8 g of modified starch (Prefeflo^{R} PJ20) and 1.34 g of modified cellulose mix containing 0.67 g of methylcellulose (Benecel^{R} M021) and 0.67 g of carboxymethylcellulose (Blanose^{R} Cellulose Gum 7HXF) were blended together. The dry powdered blend was dispersed in 179 ml of cold water, stirred with a whisk for about 30 seconds. After this time, the viscosity was measured at 20°C with the Brookfield LVF viscosimeter by using spindle 3 at a speed of 30 rpm. Then the sauce was stirred and heated until boiling for 1 minute, before cooling down to 80°C. The viscosity was measured at this temperature in the same conditions as at 20°C. During the cooling down to 60°C and afterwards to 30°C, the sauce was stirred with a mechanical stirrer turning at 700 rpm. When these two temperatures were reached, the viscosity was measured under the same conditions as above.

The following viscosities were obtained:

| | |
|---|---|
| Vis. mPa.s at 20°C | 1800 |
| Vis. mPa.s at 80°C | 2080 |
| Vis. mPa.s at 60°C | 2300 |
| Vis. mPa.s at 30°C | 2500 |
| Yield vis. 30°C/vis. 80°C | 1.2 |

### Example 13

Two trials were made in order to demonstrate the influence of the heating, cooling and reheating after a storage of a Bechamel sauce in the freezer.

### Trial 1

In a 250 ml beaker, 11.65 g of modified starch (Pregeflo^{R} PJ20) and a blend 1.5 g of methylcellulose (Benecel^{R} M021) and 0.5 g of carboxymethylcellulose (Blanose^{R} Cellulose Gum 7HXF), then 13.65 g of skimmed milk powder, 8.5 g of half skimmed milk powder, 11.5 g of fat powder (Pulsio^{R} 40) and 2 g of salt were introduced.

All these powders were well mixed prior to the addition of 250 ml of cold water. In this case, the ratio MC/CMC was 75/25 and the concentration of these two ingredients was 0.67 % in the final product. The starch concentration was 3.9 % by weight of the final product.

After the addition of the dry blend in water, the sauce was stirred 5 min with a mechanical stirrer (speed 1200 rpm) before heating to 80°C, without stirring in a water bath.

At this temperature, the sauce was stirred with a spoon. Then the viscosity was measured with a Brookfield LVF viscosimeter equipped with the spindle 4 at a speed of 30 rpm. Afterwards, the sauce was cooled down to 60°C, 45°C and 30°C. Before measuring the viscosity at these different temperatures, in the same conditions than before, the sauce was stirred with a spoon, to get a homogeneous temperature in the product. Then the sauce was cooled down until the ambient temperature before the storage in the freezer for 48 hours at -20°C. After his delay, the sauce was reheated to 80°C in a conventional oven, and the viscosity was measured at this temperature, before cooling down to 60°C, 45°C and 30°C. The viscosity was also measured at these temperatures under the same conditions as before the freezing. The viscosities are reported in the table 4.

### Trial 2 Control

In this trial 14.9 g of modified starch (Pregeflo^{R} PJ20) instead of 11.65 g in the precedent trial were used while the blend of methylcellulose and carboxmethylcellulose was not added. For the other ingredients, the quantities used, were the same as in Trial 1.

The process conditions (heating, cooling, reheating) were identical as the one described in Trial 1. The conditions for the viscosity measurements were the same. The viscosities are reported in table 4.

The texture of the sauce was less unctuous than that in Trial 1.

**TABLE 4**

| | Vis. after heating and reheating mPa.s | | | |
|---|---|---|---|---|
| Temperature °C | Trial 1 | | Trial 2 | |
| | (1) | (2) | (1) | (2) |
| 80 | 6900 | 6500 | 5900 | 4900 |
| 60 | 7700 | 7700 | 8100 | 5900 |
| 45 | 8500 | 8700 | 9900 | 8700 |
| 30 | 9300 | 10000 | 11800 | 10900 |
| Yield vis.60°C/vis. 80°C | 1.1 | 1.2 | 1.4 | 1.2 |
| Yield vis. 30°C/vis. 60°C | 1.2 | 1.3 | 1.5 | 1.85 |

| | | | | |
|---|---|---|---|---|
| (1) Viscosities measured after heating to 80°C and during cooling down. | | | | |
| (2) Viscosities measured after storage in the freezer and reheating to 80°C and then during cooling down. | | | | |

The different examples presented here above demonstrate the stability of the viscosity of several products depending on temperature and this with different compositions of thickening mixture and under different conditions of heating.

## Claims

1. A fluid food composition having a relatively constant viscosity over a temperature range of at least 30 to 80 °C comprising at least one food ingredient in an aqueous dispersion or suspension and a ternary thickener combination of
i) starch, modified starch or mixtures thereof,
ii) a thermally gelling water-soluble polysaccharide or mixtures thereof, and
iii) a thickening water-soluble polysaccharide or mixtures thereof, wherein the ternary thickener combination comprises 60 to 95 % by weight of starch or modified starch and a total of 5 to 40 % by weight of the thermally gelling water-soluble and the thickening water-soluble polysaccharide.

2. The composition of claim 1 comprising the ternary thickener composition in an amount of 1 to 7 % by weight based on the total weight of food to be thickened.

3. The composition of claim 1 or 2, wherein the thermally gelling water-soluble polysaccharide and the thickening water-soluble polysaccharide are in the weight ratio range of 20 to 80 to 80 to 20, preferably 40 to 60 to 60 to 40.

4. The composition of anyone of claims 1 to 4, wherein the starch or modified starch is derived from corn, potatoes, wheat, rice or combinations thereof and is native or pregelatinized.

5. The composition of claim 4, wherein the starch is acetylated distarch phosphate or acetylated distarch adipate.

6. The composition of anyone of claims 1 to 5, wherein the thermally gelling water-soluble polysaccharide is selected from the group consisting of methylcellulose, hydroxypropylmethylcellulose and mixtures thereof.

7. The composition of anyone of claims 1 to 6, wherein the thickening water-soluble polysaccharide is selected from the group consisting of sodium carboxymethylcellulose, alginate, guar, locust bean gum, xanthan gum, and mixtures thereof.

8. The composition of anyone of claims 1 to 7, wherein the composition is a salted or sweet sauce, a cream soup, a gravy, or a salted or sweet fluid filling.

9. A composition of claim 8, wherein the composition is a Bechamel type sauce or a tomato sauce.

10. A method of preparing a fluid food composition according to anyone of claims 1 to 9 comprising
(a) dispersing a dry blended ternary thickener combination of (i) a starch or modified starch, (ii) a thermally gelling water-soluble polysaccharide, and (iii) a thickening water-soluble polysaccharide in at least one unthickened food ingredient, and
(b) heating the mixture blend of step (a) with agitation until the ternary thickener combination dissolves and the starch or modified starch thickens.

11. A method according to claim 10 comprising the preparation of a mixture of at least two unthickened food ingredients at ambient temperature prior to the dispersion of the thickener combination.

12. A method of preparing a fluid food composition acccording to claim 10 comprising the sequential or simultaneous incorporation of starch or a modified starch, a thermally gelling water-soluble polysaccharide and a thickening water-soluble polysaccharide with at least one unthickened food ingredient and water followed by heating the mixture.

## Patentansprüche

1. Fluide Nahrungsmittel-Zusammensetzung, die eine relativ konstante Viskosität über einen Temperaturbereich von wenigstens 30 bis 80 °C hat, umfassend wenigstens einen Nahrungsmittelinhaltsstoff in einer wäßrigen Dispersion oder Suspension und eine ternäre Verdickungsmittel-Kombination aus:
i) Stärke, modifizierter Stärke oder Mischungen derselben;
ii) einem thermisch gelierenden, wasserlöslichen Polysaccharid oder Mischungen desselben, und
iii) einem verdickenden, wasserlöslichen Polysaccharid oder Mischungen desselben,
worin die ternäre Verdickungsmittel-Kombination 60 bis 95 Gew.-% Stärke oder modifizierte Stärke und insgesamt 5 bis 40 Gew.-% des thermisch gelierenden, wasserlöslichen Polysaccharids und des verdickenden, wasserlöslichen Polysaccharids umfasst.

2. Zusammensetzung gemäß Anspruch 1, umfassend die ternäre Verdickungsmittel-Kombination in einer Menge von 1 bis 7 Gew.-%, bezogen auf das Gesamtgewicht des zu verdickendes Nahrungsmittels.

3. Zusammensetzung gemäß den Ansprüchen 1 oder 2, worin das thermisch gelierende, wasserlösliche Polysaccharid und das verdickende, wasserlösliche Polysaccharid in einem Gewichtsverhältnisbereich von von 20:80 bis 80:20, vorzugsweise von 40:60 bis 60:40, vorliegen.

4. Zusammensetzung gemäß irgendeinem der Ansprüche 1 bis 4, worin die Stärke oder modifizierte Stärke sich von Mais, Kartoffeln, Weizen, Reis oder Kombination derselben ableitet und natürlich oder vorgelatinisiert ist.

5. Zusammensetzung gemäß Anspruch 4, worin die Stärke acetyliertes Distärkephosphat oder acetyliertes Distärkeadipat ist.

6. Zusammensetzung gemäß irgendeinem der Ansprüche 1 bis 5, worin das thermisch gelierende, wasserlösliche Polysaccharid aus der aus Methylcellulose, Hydroxypropylcellulose und Mischungen derselben bestehenden Gruppe ausgewählt ist.

7. Zusammensetzung gemäß irgendeinem der Ansprüche 1 bis 6, worin das verdickende, wasserlösliche Polysaccharid aus der aus Natriumcarboxymethylcellulose, Alginat, Guar, Johannisbrotgum, Xanthangum und Mischungen derselben bestehenden Gruppe ausgewählt ist.

8. Zusammensetzung gemäß irgendeinem der Ansprüche 1 bis 7, worin die Zusammensetzung eine gesalzene oder gesüßte Soße, eine Cremesuppe, ein Bratensaft oder eine gesalzene oder gesüßte, fluide Füllung ist.

9. Zusammensetzung gemäß Anspruch 8, worin die Zusammensetzung eine Soße vom Bechameltyp oder eine Tomatensoße ist.

10. Verfahren zur Herstellung einer fluiden Nahrungsmittel-Zusammensetzung gemäß irgendeinem der Ansprüche 1 bis 9, umfassend
(a) das Dispergieren einer trocken vermischten, ternären Verdickungsmittel-Kombination von (i) Stärke oder modifizierter Stärke, (ii) eines thermisch gelierenden, wasserlöslichen Polysaccharids und (iii) eines verdickenden, wasserlöslichen Polysaccharids in wenigstens einem nichtverdickten Nahrungsmittelinhaltsstoff, und
(b) das Erwärmen der Mischung von Schritt (a) unter Rühren, bis die ternäre Verdickungsmittel-Kombination sich löst und die Stärke oder modifizierte Stärke verdickt.

11. Verfahren gemäß Anspruch 10, umfassend die Herstellung einer Mischung von wenigstens zwei nichtverdickten Nahrungsmittelinhaltsstoffen bei Umgebungstemperatur, bevor die Verdickungsmittel-Kombination dispergiert wird.

12. Verfahren zur Herstellung einer fluiden Nahrungsmittel-Zusammensetzung gemäß Anspruch 10, umfassend das aufeinanderfolgende oder gleichzeitige Vermischen von Stärke oder modifizierter Stärke, eines thermisch gelierenden, wasserlöslichen Polysaccharids und eines verdickenden, wasserlöslichen Polysaccharids mit wenigstens einem nichtverdickten Nahrungsmittelinhaltsstoff und Wasser, und das anschließende Erwärmen der Mischung.

## Revendications

1. Composition alimentaire fluide ayant une viscosité relativement constante sur une plage de températures d'au moins 30 à 80°C, comprenant au moins un ingrédient alimentaire en dispersion ou suspension aqueuse et une association d'épaississants ternaire constituée :
i) d'amidon, d'amidon modifié ou d'un de leurs mélanges,
ii) d'un polysaccharide hydrosoluble apte à la gélification à chaud ou d'un mélange de tels polysaccharides, et
iii) d'un polysaccharide épaississant hydrosoluble ou d'un mélange de tels polysaccharides,
dans laquelle l'association d'épaississants ternaire comprend 60 à 95 % en poids d'amidon ou d'amidon modifié et une quantité totale de 5 à 40 % en poids du polysaccharide hydrosoluble apte à la gélification à chaud et du polysaccharide épaississant hydrosoluble.

2. Composition suivant la revendication 1, comprenant la composition d'épaississants ternaire, en une quantité de 1 à 7 % en poids sur la base du poids total de l'aliment à épaissir.

3. Composition suivant la revendication 1 ou 2, dans laquelle le polysaccharide hydrosoluble apte à la gélification à chaud et le polysaccharide épaissisant hydrosoluble sont présents en un rapport pondéral compris dans l'intervalle de 20:80 à 80:20, de préférence de 40:60 à 60:40.

4. Composition suivant l'une quelconque des revendications 1 à 4, dans laquelle l'amidon ou l'amidon modifié est dérivé du maïs, de la pomme de terre, du blé, du riz ou de leurs associations et est naturel ou prégélatinisé.

5. Composition suivant la revendication 4, dans laquelle l'amidon consiste en phosphate de diamidon acétylé ou adipate de diamidon acétylé.

6. Composition suivant l'une quelconque des revendications 1 à 5, dans laquelle le polysaccharide hydrosoluble apte à la gélification à chaud est choisi dans le groupe consistant en la méthylcellulose, l'hydroxypropylméthylcellulose et leurs mélanges.

7. Composition suivant l'une quelconque des revendications 1 à 6, dans laquelle le polysaccharide épaississant hydrosoluble est choisi dans le groupe consistant en la carboxyméthylcellulose sodique, un alginate, la gomme guar, la gomme de caroube, la gomme xanthane et leurs mélanges.

8. Composition suivant l'une quelconque des revendications 1 à 7, qui est une source salée ou douce, une soupe à la crème, un jus de viande ou une garniture fluide salée ou douce.

9. Composition suivant la revendication 8, qui est une sauce du type béchamel ou une sauce tomate.

10. Procédé pour la préparation d'une composition alimentaire fluide suivant l'une quelconque des revendications 1 à 9, comprenant les étapes consistant
(a) à disperser une association d'épaississants ternaire, mélangée à sec, (i) d'un amidon ou d'un amidon modifié, (ii) d'un polysaccharide hydrosoluble apte à la gélification à chaud et (iii) d'un polysaccharide épaississant hydrosoluble dans au moins un ingrédient alimentaire non épaissi, et
(b) à chauffer le mélange de l'étape (a) sous agitation jusqu'à ce que l'association d'épaississants ternaire se dissolve et que l'amidon ou l'amidon modifié épaississe.

11. Procédé suivant la revendication 10, comprenant la préparation d'un mélange d'au moins deux ingrédients alimentaires non épaissis à température ambiante avant la dispersion de l'association d'épaississants.

12. Procédé pour la préparation d'une composition alimentaire fluide suivant la revendication 10, comprenant l'incorporation de manière successive ou simultanée d'amidon ou d'un amidon modifié, d'un polysaccharide hydrosoluble apte à la gélification à chaud et d'un polysaccharide épaississant hydrosoluble à au moins un ingrédient alimentaire non épaissi et de l'eau, puis le chauffage du mélange.
